(19) **Europäisches Patentamt**
**European Patent Office**
**Office européen des brevets**

(11) **EP 3 688 323 B1**

(12) **FASCICULE DE BREVET EUROPEEN**

(45) Date de publication et mention de la délivrance du brevet:
**19.10.2022 Bulletin 2022/42**

(21) Numéro de dépôt: **18780070.1**

(22) Date de dépôt: **26.09.2018**

(51) Classification Internationale des Brevets (IPC):
**F16B 39/18** (2006.01)   **F16B 1/00** (2006.01)
**F16B 33/02** (2006.01)

(52) Classification Coopérative des Brevets (CPC):
**F16B 39/18; F16B 1/0071; F16B 33/02**

(86) Numéro de dépôt international:
**PCT/EP2018/076043**

(87) Numéro de publication internationale:
**WO 2019/063578 (04.04.2019 Gazette 2019/14)**

(54) **DISPOSITIF DE BLOCAGE D'ÉCROU ET ENSEMBLE DE MONTAGE ASSOCIÉ**

MUTTERVERRIEGELUNGSVORRICHTUNG UND ANORDNUNG ZUR MONTAGE DAVON

NUT LOCKING DEVICE AND ASSEMBLY FOR MOUNTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2017 FR 1758873**

(43) Date de publication de la demande:
**05.08.2020 Bulletin 2020/32**

(73) Titulaire: **LISI Aerospace**
**75012 Paris (FR)**

(72) Inventeurs:
• **BOLEIS, Gildas**
**22410 Lantic (FR)**

• **PHILIPPE, Alan**
**22400 Lamaballe (FR)**
• **PETIT, Pierre**
**78750 Andrésy (FR)**
• **BROUCKE, Martial**
**60240 Delincourt (FR)**

(74) Mandataire: **Lavoix**
**2, place d'Estienne d'Orves**
**75441 Paris Cedex 09 (FR)**

(56) Documents cités:
**EP-A1- 0 130 304    FR-A- 1 021 911**
**GB-A- 2 258 026    GB-A- 2 282 202**
**US-A- 5 248 232**

**Description**

La présente invention concerne un dispositif de blocage, du type comportant : un arbre comprenant un premier filetage, et un écrou et une bague destinés à être assemblés sur l'arbre. L'écrou comprend un premier taraudage apte à coopérer avec le premier filetage de l'arbre, lesdits premiers filetage et taraudage définissant un premier jeu radial ; l'écrou comprenant en outre un deuxième taraudage de sens opposé au premier taraudage, les premier et deuxième taraudages étant coaxiaux ; une surface extérieure de la bague comportant un deuxième filetage apte à coopérer avec le deuxième taraudage de l'écrou, lesdits deuxièmes filetage et taraudage définissant un deuxième jeu radial ; une surface intérieure de ladite bague comportant un troisième taraudage apte à coopérer avec le premier filetage de l'arbre, lesdits premier filetage et troisième taraudage définissant un troisième jeu radial.

Un tel dispositif de blocage est notamment connu du document EP0130304. Pour réaliser le serrage d'éléments positionnés sur une vis filetée en butée contre la tête de vis, la bague est vissée en sens inverse dans l'écrou, puis l'écrou et la bague sont installés ensemble sur la vis jusqu'à ce que l'écrou serre les éléments contre la tête de la vis. Pour finaliser le serrage, la bague est vissée en sens inverse dans l'écrou jusqu'à ce que les flancs de filets 'vis/écrou', 'écrou/bague' et 'bague/vis' soient au contact les uns des autres.

Dans cette configuration, les flancs de filet 'vis/écrou' et 'bague/vis' subissent des efforts de coin dans des directions opposées du fait du filetage de sens inversé de l'ensemble 'bague / écrou'. Ces efforts opposés tendent à repousser l'écrou de la bague, et à pousser l'écrou contre la tête de vis, donc à maintenir les éléments serrés. Sous l'effet de vibrations tendant à dévisser soit l'écrou, soit la bague, le filetage de sens inversé provoque le vissage de l'autre élément : le dispositif de blocage d'écrou est alors anti-dévisseur par construction.

Le document EP0130304 utilise des pas différents entre le filetage de l'ensemble 'bague/écrou' d'une part, et les filetages des ensembles 'vis/écrou' et 'vis/bague' d'autre part, afin de permettre la rotation de la bague par rapport à l'écrou - et vice versa - sur un angle assez large. Sans cette liberté de rotation, le dispositif de blocage se bloquerait sous l'impression d'un angle très faible, de l'ordre de quelques degrés, ce qui rendrait son démontage ou son montage quasi-impossible. L'utilisation de pas plus fins ou plus larges a cependant pour inconvénient de rendre l'ensemble difficile à monter et à bloquer, car l'angle de rotation de l'un des éléments du dispositif est limité par la longueur du plus petit pas de ces éléments.

Un but de l'invention est de fournir un dispositif de blocage comprenant un écrou et une bague ayant des filetages de sens inversé, sans les inconvénients des dispositifs de blocage de l'art antérieur.

A cet effet, l'invention a pour objet un dispositif de blocage du type précité, dans lequel les premier, deuxième et troisième taraudages et les premier et deuxième filetages présentent un pas de filet identique et constant ; et chacun des deuxième et troisième jeux radiaux est supérieur au premier jeu radial.

L'invention se rapporte en outre à un ensemble pour dispositif de blocage du type comportant : un écrou comprenant un premier et un deuxième taraudages coaxiaux et de sens opposé ; et une bague ; une surface intérieure de ladite bague comportant un troisième taraudage, les premier et troisième taraudages étant aptes à coopérer avec un même premier filetage; une surface extérieure de ladite bague comportant un deuxième filetage apte à coopérer avec le deuxième taraudage de l'écrou.

Les premier et troisième taraudages sont aptes à coopérer avec un même premier filetage de profil triangulaire ISO normalisé, de sorte à définir avec ledit premier filetage un premier et un troisième jeux radiaux ; le deuxième filetage est apte à coopérer avec le deuxième taraudage de sorte à définir un deuxième jeu radial ; les premier, deuxième et troisième taraudages et le deuxième filetage présentent un pas de filet identique et constant ; chacun des premier taraudage et deuxième filetage présentent un profil triangulaire ISO normalisé ; et les deuxième et troisième taraudages présentent un profil triangulaire ISO, dont un diamètre à flanc de filet est supérieur au diamètre à flanc de filet du profil triangulaire ISO normalisé, de sorte que chacun des deuxième et troisième jeux radiaux est supérieur au premier jeu radial.

Suivant d'autres avantages de l'invention, l'ensemble comporte l'une ou plusieurs des caractéristiques suivantes, prises isolément ou suivant toutes les combinaisons techniquement possibles :

- chacun des diamètres à flanc de filet des deuxième et troisième taraudages est augmenté d'une même valeur de décalage par rapport au diamètre à flanc de filet du profil triangulaire ISO normalisé correspondant ;
- la valeur de décalage A est définie suivant la formule suivante :

$$A \geq (2P \times \alpha) / (360° \times \mathrm{Tan}\, \beta)$$

avec $\alpha$ = angle minimum de serrage souhaité, exprimé en degrés, et $\beta$ = demi angle de filet ISO, exprimé en degrés ;
- l'angle minimum de serrage souhaité est compris entre 10° et 60° ;
- l'écrou comprend des premières surfaces d'entraînement permettant un entraînement en rotation dudit écrou par rapport à l'arbre et/ou par rapport à la bague ; la bague comprend des deuxièmes surfaces d'entraînement permettant un entraînement en rotation de ladite bague par rapport à l'arbre et/ou par rapport à l'écrou ; lesdites premières et deuxièmes surfaces d'entraînement étant configurées pour s'aligner les unes aux autres, de sorte à permettre un entraînement en rotation de l'écrou conjointement à la bague ;

- les premières et deuxièmes surfaces d'entraînement sont formées par des plans sensiblement parallèles à un axe de rotation de l'écrou et/ou de la bague.

L'invention se rapporte en outre à un dispositif de blocage tel que décrit ci-dessus, comprenant un arbre et un ensemble tel que décrit ci-dessus, le premier filetage de l'arbre présentant un profil triangulaire ISO normalisé.

Un autre but de l'invention est de fournir un dispositif de blocage comprenant un écrou et une bague équipés d'un marquage visuel signalant que ledit écrou et ladite bague sont, ou non, correctement verrouillés.

A cet effet, un premier mode de réalisation préférentiel de l'invention se rapporte à un ensemble pour dispositif de blocage décrit ci-dessus, s'étendant selon un axe principal, dans lequel : une portion de la bague, en saillie radiale externe par rapport au deuxième filetage, comporte au moins une lumière traversante selon l'axe principal ; et une surface de l'écrou, perpendiculaire à l'axe principal, comporte au moins un marquage visuel, ledit au moins un marquage visuel étant configuré pour être en vis-à-vis de l'au moins une lumière lorsque l'écrou et la bague sont dans une position d'installation, et à l'écart de ladite au moins une lumière lorsque l'écrou et la bague sont hors de ladite position d'installation.

Suivant un autre avantage dudit premier mode de réalisation préférentiel , la portion de la bague comporte un nombre de lumières traversantes compris entre deux et dix, préférentiellement égal à six, lesdites lumières traversantes étant régulièrement réparties autour de l'axe principal ; et la surface de l'écrou comporte un même nombre de marquages visuels, chacun desdits marquages visuel étant configuré pour être en vis-à-vis de l'une des lumières lorsque l'écrou et la bague sont dans une position d'installation, et à l'écart de ladite lumière lorsque l'écrou et la bague sont hors de ladite position d'installation.

Un autre but de l'invention est de fournir un dispositif de blocage comprenant un écrou et une bague associés à un moyen de verrouillage positif. On entend par « moyen de verrouillage positif » une troisième pièce qui doit être cassée ou déformée plastiquement pour autoriser la rotation de la bague vis-à-vis de l'écrou une fois que le dispositif de blocage est en position verrouillée.

A cet effet, un deuxième mode de réalisation préférentiel de l'invention se rapporte à un ensemble pour dispositif de blocage décrit ci-dessus, s'étendant selon un axe principal et comportant en outre une rondelle configurée de sorte à être insérée autour de l'un de l'écrou et de la bague, de manière fixe en rotation par rapport audit écrou ou à ladite bague, la rondelle comprenant un moyen d'emboîtement élastique avec l'autre de la bague et de l'écrou dans une position d'installation de l'ensemble, de sorte à empêcher une rotation l'un par rapport à l'autre de la bague et de l'écrou à partir de ladite position d'installation.

Suivant d'autres avantages du deuxième mode de réalisation préférentiel, l'ensemble pour dispositif de blocage comporte l'une ou plusieurs des caractéristiques suivantes, prises isolément ou suivant toutes les combinaisons techniquement possibles :

- la rondelle comporte un corps annulaire et au moins une languette en saillie radiale par rapport audit corps annulaire, ledit corps annulaire comprenant un moyen de blocage en rotation avec l'un de l'écrou et de la bague, ladite au moins une languette étant déformable élastiquement entre une configuration de repos et une configuration de contrainte, dans lesquelles la rondelle est respectivement en saillie axiale par rapport au corps annulaire et sensiblement coplanaire audit corps annulaire, l'ensemble étant configuré de sorte que, dans la position d'installation, l'au moins une languette est en configuration de repos, la saille axiale de ladite au moins une languette étant apte à bloquer en rotation l'un par rapport à l'autre la bague et l'écrou ;

- l'écrou et la bague comportent respectivement une première et une seconde surfaces sensiblement perpendiculaires à l'axe principal, telles que, lorsque l'écrou et la bague sont dans une configuration angulaire différente de la position d'installation, lesdites première et seconde surfaces sont aptes à maintenir l'au moins une languette dans la configuration de contrainte, l'une des première ou seconde surfaces comprenant au moins une encoche apte à s'assembler avec ladite au moins une languette en configuration de repos dans la position d'installation de l'ensemble.

L'invention se rapporte en outre à un kit de montage d'un dispositif de blocage, ledit kit de montage comportant : un ensemble pour dispositif de blocage tel que décrit ci-dessus ; et un outil de montage comportant une douille tubulaire, une extrémité de ladite douille comprenant une surface intérieure apte à s'engager avec les premières et deuxièmes surfaces d'entraînement, respectivement de l'écrou et de la bague, pour un entraînement en rotation de l'écrou conjointement à la bague.

Suivant d'autres avantages de l'invention, l'ensemble dudit kit de montage comprend la rondelle décrite ci-dessus ; et l'outil de montage dudit kit de montage comporte en outre un manchon tubulaire comprenant une première et une seconde extrémités, aptes à s'engager respectivement avec la surface intérieure de la douille et avec les deuxièmes surfaces d'entraînement de la bague, pour un entraînement en rotation de la bague par rapport à l'écrou ; le manchon comprenant en outre au moins une saillie apte à déformer l'au moins une languette de la rondelle depuis la configuration de repos vers la configuration de contrainte, de sorte à permettre une rotation de la bague par rapport à l'écrou depuis la position d'installation.

L'invention sera mieux comprise à la lecture de la description qui va suivre, donnée uniquement à titre d'exemple non limitatif et faite en se référant aux dessins sur lesquels :

- les figures 1, 2 et 3 sont des vues en perspective éclatée d'un ensemble pour dispositif de blocage, respectivement selon un premier, un deuxième et un troisième modes de réalisation de l'invention ;
- les figures 4 à 6 sont des vues de détail, en coupe, d'un dispositif de blocage réalisé à partir d'un ensemble de la figure 1, respectivement dans une première, une deuxième et une troisième configurations ;
- la figure 7 est une représentation schématique d'un profil de filet base de type ISO ;
- les figures 8 à 10 sont des vues de détail du dispositif de blocage des figures 4 à 6 ;
- la figure 11 est une vue de détail de l'ensemble pour dispositif de blocage de la figure 1 ;
- la figure 12 est une vue de détail d'un dispositif de blocage réalisé à partir d'un ensemble de la figure 3 ; et
- la figure 13 est une vue en perspective éclatée d'un outil de montage pour le dispositif de blocage des figures 4 à 6.

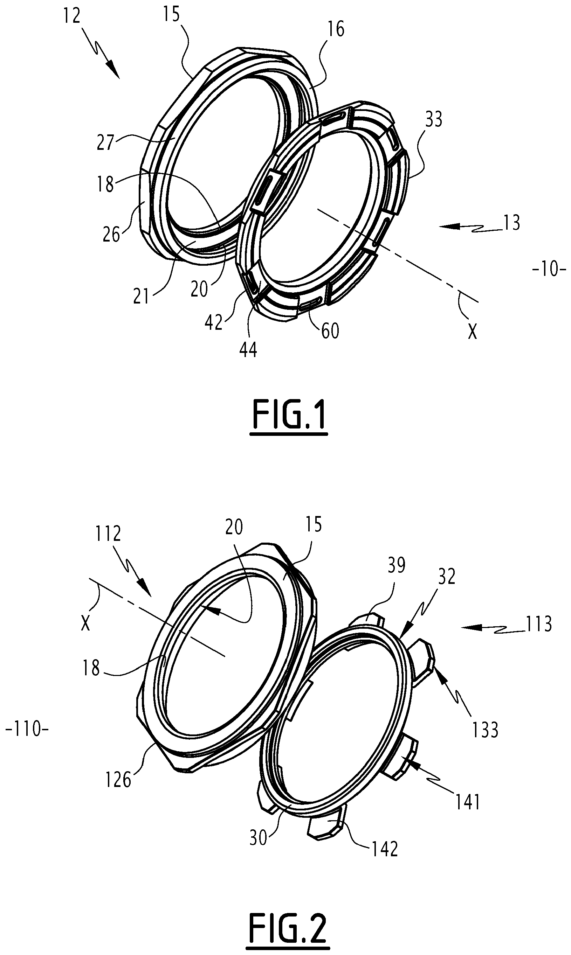

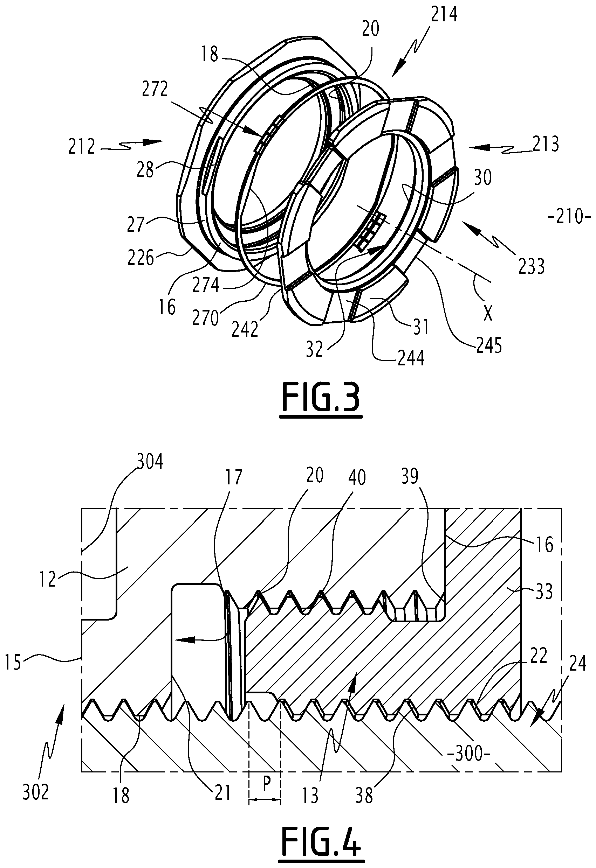

Chacune des figures 1, 2 et 3 montre un ensemble 10, 110, 210 pour dispositif de blocage, respectivement selon un premier, un deuxième et un troisième modes de réalisation de l'invention. Les figures 4 à 6 représentent un dispositif de blocage 300 formé à partir de l'ensemble 10 de la figure 1. Chacun des ensembles 110 et 210 est apte à être utilisé pour former un dispositif de blocage analogue au dispositif 300.

Dans la description qui suit, les ensembles 10, 110 et 210 seront décrits simultanément, les éléments communs étant désignés par les mêmes numéros de référence.

L'ensemble 10, 110, 210 pour dispositif de blocage comporte un écrou 12, 112, 212 et une bague 13, 113, 213. L'ensemble 210 de la figure 3 comporte en outre une rondelle 214.

Chacun des éléments de l'ensemble 10, 110, 210 a une forme générale sensiblement circulaire ou cylindrique, s'étendant selon un axe principal X.

L'écrou 12, 112, 212 présente une forme annulaire s'étendant axialement entre une première 15 et une deuxième 16 extrémités. Chacune desdites première 15 et deuxième 16 extrémités est formée par une surface plane, sensiblement perpendiculaire à l'axe principal X.

L'écrou 12, 112, 212 comporte une surface intérieure de révolution 17 d'axe X. La surface intérieure 17 comprend un premier 18 et un deuxième 20 taraudages coaxiaux. Selon l'axe X, lesdits premier 18 et deuxième 20 taraudages sont respectivement disposés du côté de la première 15 et de la deuxième 16 extrémité.

Les premier 18 et deuxième 20 taraudages sont séparés par un épaulement 21, disposé dans un plan perpendiculaire à X. La surface intérieure 17 présente un diamètre moyen plus élevé au niveau du deuxième taraudage 20 que du premier taraudage 18.

Le premier taraudage 18 présente un premier sens de rotation et le deuxième taraudage 20 présente un deuxième sens de rotation opposé. Les premier 18 et deuxième 20 taraudages présentent un pas P identique, représenté sur la figure 4.

Le premier taraudage 18 est apte à coopérer avec un premier filetage 22 d'un arbre 24, ledit arbre étant inclus dans le dispositif de blocage 300 et représenté sur les figures 4 à 6. Les premier 18 et deuxième 20 taraudages seront décrits plus en détail ci-après.

L'écrou 12, 112, 212 comporte en outre une surface extérieure, une première partie de ladite surface extérieure comprenant des sections d'entraînement 26, 126, 226 permettant à un outil d'entraîner en rotation ledit écrou. Lesdites sections d'entraînement 26, 126, 226 se présentent dans des plans parallèles à X. Dans les modes de réalisation représentés, les sections d'entraînement 26, 126, 226 définissent une section hexagonale dans un plan perpendiculaire à X.

Une deuxième partie 27 de la surface extérieure de l'écrou, de forme sensiblement cylindrique de révolution d'axe X, prolonge axialement la première partie comprenant les sections d'entraînement 26, 126, 226. Dans le mode de réalisation de la figure 3, deux empreintes 28 sont réalisées en creux dans ladite deuxième partie 27. Lesdites empreintes 28 sont disposées selon des plans parallèles l'un à l'autre et à l'axe principal X.

La bague 13, 113, 213 présente une forme annulaire s'étendant axialement entre une troisième 30 et une quatrième 31 extrémités. Chacune desdites troisième 30 et quatrième 31 extrémités est formée par une surface plane, sensiblement perpendiculaire à l'axe principal X.

La bague 13, 113, 213 comporte une première 32 et une deuxième 33, 133, 233 portions, coaxiales et alignées selon X. La première portion 32, disposée du côté de la troisième extrémité 30, a une forme externe sensiblement cylindrique. La deuxième portion 33, 133, 233, disposée du côté de la quatrième extrémité 31, a une forme externe en saillie radiale par rapport à la première portion 32.

La bague 13, 113, 213 comporte une surface intérieure comprenant un troisième taraudage 38, débouchant sur la troisième extrémité 30. Ledit troisième taraudage 38 présente le premier sens de rotation et est apte à coopérer avec le premier filetage 22 de l'arbre 24.

Par ailleurs, une surface extérieure de la première portion 32 comprend un deuxième filetage 40. Ledit deuxième filetage 40 présente le deuxième sens de rotation et est apte à coopérer avec le deuxième taraudage 20 de l'écrou 12, 112, 212.

La deuxième portion 33, 133, 233 comporte une surface annulaire 39, perpendiculaire à X et orientée vers la première portion 32.

La deuxième portion 33, 133, 233 comporte en outre des surfaces d'entraînement permettant d'entraîner en rotation la bague 13, 113, 213. Dans les modes de réalisation des figures 1 et 3, la deuxième portion 33, 233 a la forme d'une collerette ; dans le mode de réalisation de la figure 2, la deuxième portion 133 est formée par des pattes 141 disposées sur le pourtour de la première portion 32.

Les surfaces d'entraînement de la deuxième portion 33, 133, 233 comprennent des surfaces d'entraînement latérales 42, 142, 242, disposées dans des plans parallèles à X. Dans les modes de réalisation des figures 1 et 3, les surfaces d'entraînement latérales 42, 242 ont la même forme que les sections d'entraînement 26, 226, de manière à permettre d'entraîner conjointement la bague 13, 213 et l'écrou 12, 212. Dans le mode de réalisation de la figure 2, les surfaces d'entraînement latérales 142 sont formées par des extrémités planes des pattes 141.

Dans les modes de réalisation des figures 1 et 3, les surfaces d'entraînement de la deuxième portion 33, 233 comprennent en outre des surfaces d'entraînement frontales 44, 244, formées par des lamages en bas-relief dans la surface plane définissant la quatrième extrémité 31.

Dans le mode de réalisation de la figure 3, la deuxième portion 233 de la bague 213 comporte sur sa circonférence extérieure des encoches 245 s'étendant radialement vers l'intérieur. Par exemple, la deuxième portion 233, et notamment la surface annulaire 39 de ladite deuxième portion, comporte deux encoches 245 disposées en vis-à-vis par rapport à l'axe X. De préférence, chaque encoche 245 est réalisée au niveau d'un lamage 244.

Les figures 4 à 6 représentent un dispositif de blocage 300 réalisé à partir de l'ensemble 10 de la figure 1. Un dispositif de blocage analogue peut être obtenu avec les ensembles 110 et 210 précédemment décrits.

Le dispositif de blocage 300 comporte l'arbre 24, l'écrou 12, la bague 13 et un roulement à billes 302. Ledit roulement à billes 302 est solidaire de l'arbre 24, ledit arbre s'étendant axialement à partir d'une surface plane 304 dudit roulement à billes.

Le premier taraudage 18 de l'écrou 12 est assemblé au premier filetage 22 de l'arbre 24, la première extrémité 15 de l'écrou étant en vis-à-vis de la surface plane 304.

Le troisième taraudage 38 et le deuxième filetage 40 de la bague 13 sont respectivement assemblés au premier filetage 22 de l'arbre 24 et au deuxième taraudage 20 de l'écrou 12. La deuxième extrémité 16 de l'écrou est en vis-à-vis de la surface annulaire 39 de la collerette 33 de la bague.

Par convention, dans la suite de la description de l'écrou 12, de la bague 13 et de l'arbre 24, le terme « avant » indique une direction axiale orientée vers le roulement 302, tandis que le terme « arrière » indique une direction axiale dans le sens opposé.

Les figures 4, 5 et 6 représentent le dispositif de blocage 300 dans une première, une deuxième et une troisième configurations qui seront décrites plus en détail ci-après.

Une caractéristique de l'invention, relative aux premier 18 et deuxième 20 taraudages de l'écrou 12, 112, 212, au troisième taraudage 38 et au deuxième filetage 40 de la bague 13, 113, 213, ainsi qu'au premier filetage 22 de l'arbre 24, va à présent être décrite plus précisément.

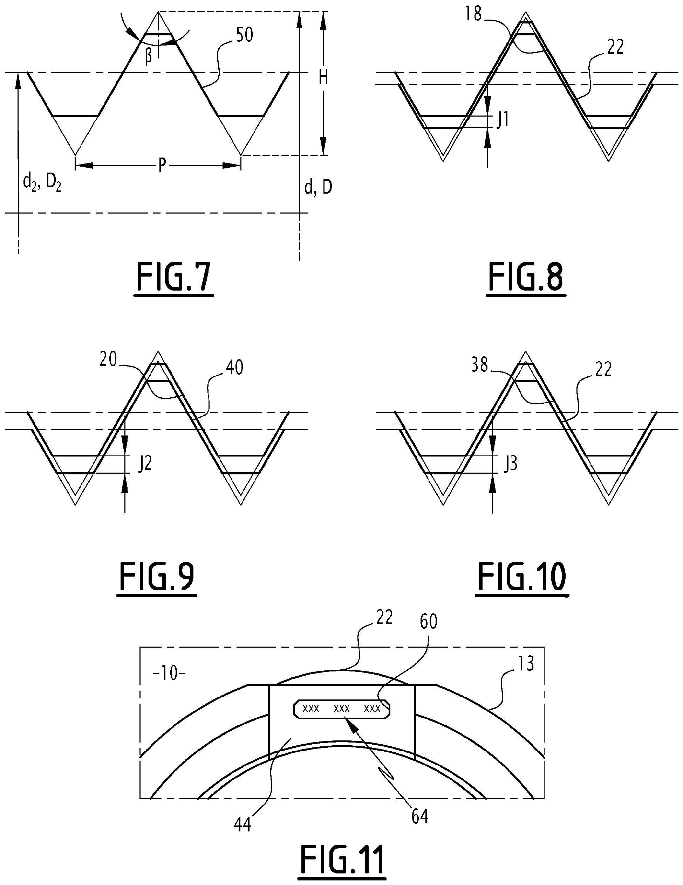

De préférence, lesdits filetages et taraudages présentent un profil de type ISO, correspondant à un profil de base 50 représenté à la figure 7. Ce profil est basé sur une forme de triangle équilatéral, correspondant à un demi-angle de filet $\beta$ égal à 30°. H représente la hauteur du triangle de base et P le pas du filet ; d, D représentent le diamètre nominal, respectivement du filetage et du taraudage ; $d_2$, $D_2$ représentent le diamètre nominal sur flanc de filet, respectivement du filetage et du taraudage.

La figure 8 représente une vue de détail du premier taraudage 18 de l'écrou 12, 112, 212 engagé avec le premier filetage 22 de l'arbre 24, définissant un premier jeu radial J1.

La figure 9 représente une vue de détail du deuxième taraudage 20 de l'écrou 12, 112, 212 engagé avec le deuxième filetage 40 de la bague 13, 113, 213, définissant un deuxième jeu radial J2.

La figure 10 représente une vue de détail du troisième taraudage 38 de la bague 13, 113, 213 engagé avec le premier filetage 22 de l'arbre 24, définissant un troisième jeu radial J3. Chacun des deuxième J2 et troisième J3 jeux radiaux est supérieur au premier jeu radial J1.

Un exemple expérimental du mode de réalisation de la figure 1 est détaillé ci-après : selon la dénomination normalisée ISO5855-1, le premier filetage 22 de l'arbre 24 et le premier taraudage 18 de l'écrou 12 sont choisis respectivement du type MJ57x1,5-4h6h et du type MJ57x1,5-4H5H. On a donc d = D = 57 mm et P = 1,5 mm. Les dénominations 4h6h et 4H5H représentent les classes de tolérance.

Pour le troisième taraudage 38 de la bague 13, destiné à s'engager avec le premier filetage 22, on considère un profil MJ57x1,5-4H5H modifié. En effet, le diamètre sur flanc de filet du troisième taraudage 38 est augmenté d'une valeur A par rapport au diamètre minimum sur flanc de filet dudit profil. Par « diamètre minimum » et « diamètre maximum », on entend respectivement la borne inférieure et la borne supérieure de la marge de tolérance.

Le deuxième filetage 40 de la bague 13 est choisi du type MJ64x1,5-4h6h, c'est-à-dire avec un diamètre nominal d égal à 64 mm, un pas P = 1,5 mm et une classe de tolérance 4h6h. Il est identique au premier filetage 22 de l'arbre.

Pour le deuxième taraudage 20 de l'écrou 12, destiné à s'engager avec le deuxième filetage 40 de la bague, on considère un profil MJ64x1,5-4H5H modifié. Le diamètre sur flanc de filet du deuxième taraudage 20 est augmenté de la valeur A par rapport au diamètre minimum sur flanc de filet dudit profil.

Le décalage positif A des diamètres sur flancs des deuxième et troisième taraudages 20 et 38 assure un jeu radial entre les flancs de filet dans les ensembles 'écrou / bague' d'une part, et 'bague / arbre' d'autre part. Ce décalage n'est pas gênant pour le montage du dispositif de blocage sur l'arbre, et permet de tourner la bague par rapport à l'écrou pour l'amener soit dans une position dite verrouillée, soit dans une position dite freinée, avec un angle suffisant pour déverrouiller le dispositif de blocage. Chacune des positions verrouillée et freinée correspond à un contact de flancs de filet des premier 18 et troisième 38 taraudages avec des flancs de filet du premier filetage 22, l'écrou étant plaqué contre le roulement à billes 304. Les positions verrouillée et freinée seront détaillées ci-après.

Avantageusement, le décalage minimum A est calculé suivant la formule ci-dessous :

$$A \geq (2P \times \alpha) / (360° \times \mathrm{Tan}\, \beta)$$

avec

    $P$ = pas du filet de l'arbre 24,
    $\alpha$ = angle minimum de serrage souhaité, exprimé en degrés,
    $\beta$ = demi angle de filet ISO, exprimé en degrés.

Le diamètre minimum sur flanc des deuxième et troisième taraudages 20 et 38 est choisi égal au diamètre maximum sur flanc du filetage ISO respectif sur lesquels ils s'engagent - c'est-à-dire respectivement le deuxième filetage 40 et le premier filetage 22 de l'arbre 24 - augmenté de la valeur du décalage A :

$$D_2\mathrm{min} = d_2\mathrm{max} + A$$

    $D_2$min, diamètre à flanc de filet minimum modifié,
    $d_2$max, diamètre à flanc de filet maximum du filetage en vis-à-vis.

Le diamètre sur flanc maximum des deuxième et troisième taraudages 20 et 38 est égal au diamètre sur flanc minimum des deuxième et troisième taraudages 20 et 38 augmenté d'une valeur de tolérance de fabrication IT, choisie par le fabricant :

$$D_2\mathrm{max} = D_2\mathrm{min} + IT$$

Par exemple, pour un filetage ISO de pas P égal à 1,5 mm, avec un angle de filet de 60°, et un angle de serrage désiré de 15°, le décalage A doit au moins être égal à :

$$A \geq (2 \times 1,5 \times 15°) / (360° \times \tan 30°) = 0,217 \text{ mm.}$$

Le diamètre maximum sur flanc du deuxième filetage 40 du type ISO MJ64x1,5-4H5H est égal à 63,026 mm. Le diamètre minimum sur flanc du deuxième taraudage 20 du type MJ57x1,5-4h6h modifié par rapport au profil ISO est donc égal à :

$$D_2\mathrm{min}\,_{20} = 63,026 + 0,217 = 63,243 \text{ mm}$$

En prenant une tolérance de fabrication de 0,132 mm, identique à la tolérance du profil MJ64x1,5-4H5H entre le diamètre maximum et le diamètre minimum à flanc de filet, le diamètre maximum à flanc de filet modifié est donc

$$D_2max_{20} = 63{,}243 + 0{,}132 = 63{,}375 \text{ mm.}$$

On calcule de la même manière les diamètres à flanc minimum et maximum du troisième taraudage 38, et l'on obtient les dimensions suivantes :

$$D_2min_{38} = 56{,}026 + 0{,}217 = 56{,}243 \text{ mm}$$

$$D_2max_{38} = 56{,}243 + 0{,}132 = 56{,}375 \text{ mm.}$$

Le décalage entre les deuxième et troisième taraudages 20 et 38 est donc en théorie le même, bien qu'en réalité, avec les tolérances de fabrication, la dimension des profils peut varier à l'intérieur de l'intervalle de tolérance.

Le décalage A peut alternativement être défini en choisissant une classe de tolérance des deuxième 20 et troisième 38 taraudages supérieur à la classe de tolérance du premier taraudage 18. Par exemple, le premier filetage 22 de l'arbre 24 et le deuxième filetage 40 de la bague 13 sont définis avec une classe de tolérance 4h6h selon la norme ISO965. Le premier taraudage 18 de l'écrou 12 est défini avec une classe de tolérance 4H5H selon cette même norme de sorte à définir le premier jeu radial J1 entre le filetage F et le premier taraudage 18 de l'écrou. Les diamètres à flanc des deuxièmes 20 et troisième 38 taraudages sont définis avec une classe de tolérance supérieure, par exemple une classe de tolérance 7H, de sorte à ménager les deuxième J2 et troisième J3 jeux radiaux. Ainsi, le premier jeu radial J1 nominal / minimum est de 116 $\mu$m / 0 $\mu$m ; et les deuxième J2 et J3 jeux radiaux nominal / minimum sont de 249 $\mu$m / 133 $\mu$m.

Dans cet exemple, un décalage A de 133 $\mu$m permet de tourner la bague par rapport à l'écrou avec une plage angulaire de +/- 17° par rapport à une position nominale où tous les jeux sont centrés. Dans la réalité, en intégrant les intervalles de tolérance de fabrication et en considérant le fait que le dispositif de fixation n'est pas infiniment rigide, la plage angulaire de rotation de la bague 13 varie entre 18° et 50°.

Avantageusement, le décalage positif A des diamètres sur flancs des deuxième et troisième taraudages est choisi pour obtenir un angle de blocage ou de déblocage de la bague par rapport à l'écrou variant entre 10 et 90°. En dessous de 10°, l'angle est trop faible pour maîtriser correctement le blocage et le déblocage du dispositif de blocage, et au-dessus de 90°, le jeu entre diamètre sur flancs devient trop important et il n'y a plus assez de surface de contact entre les flancs des filets en prise pour assurer un blocage efficace.

Faire varier les diamètres à flanc de filet de certains filetages/taraudages tout en gardant un pas P identique entre tous les filetages/taraudages du dispositif de blocage 300 permet de garantir systématiquement que l'ensemble 10, 110, 210 peut être monté sur l'arbre 24. Par ailleurs, la fabrication est simplifiée car il ne faut qu'un outil pour réaliser tous les taraudages, mêmes les taraudages modifiés. Le décalage radial généra par l'augmentation du diamètre sur flanc peut en effet être réalisée avec l'outil utilisé pour fabriquer le taraudage non modifié, simplement en décalant radialement l'outil pour créer le décalage A. Le décalage radial a ainsi un avantage par rapport à un décalage de côte axial, qui nécessite un outil de forme spécifique pour fabriquer un taraudage modifié.

Un autre avantage du décalage radial est que le choix d'un angle de rotation pour amener le dispositif en position de blocage permet de calculer un couple maximum à appliquer à la bague, couple qui peut être donné en consigne à un opérateur. Une consigne d'angle est effectivement compliquée à respecter, à cause de l'inertie des outillages et des incertitudes des outillages de mesure.

Une première caractéristique préférentielle de l'invention, relative au mode de réalisation de la figure 1, va à présent être décrite plus précisément.

L'ensemble 10 de la figure 1 est muni d'un moyen visuel permettant de repérer facilement si le dispositif de blocage est effectivement verrouillé. En particulier, la bague 13 comporte des lumières 60 disposées sur la deuxième portion 33 de la bague 13. La figure 11 montre une vue de détail de la bague 13 assemblée à l'écrou 12 au niveau d'une lumière 60.

La deuxième extrémité 16 de l'écrou 12, en vis-à-vis des lumières 60, est munie de marquages 64, par exemple une couleur ou un mot, comme « LOCK », qui indique par convention que le dispositif de blocage est verrouillé quand le ou les marquages sont visibles à travers la ou les lumières 60.

De préférence, chaque lamage 44 de ladite deuxième portion 33 est traversé axialement par une lumière 60. D'autres dispositions sont possibles, comme indiqué précédemment.

Une deuxième caractéristique préférentielle de l'invention, relative au mode de réalisation de la figure 3, va à présent être décrite plus précisément.

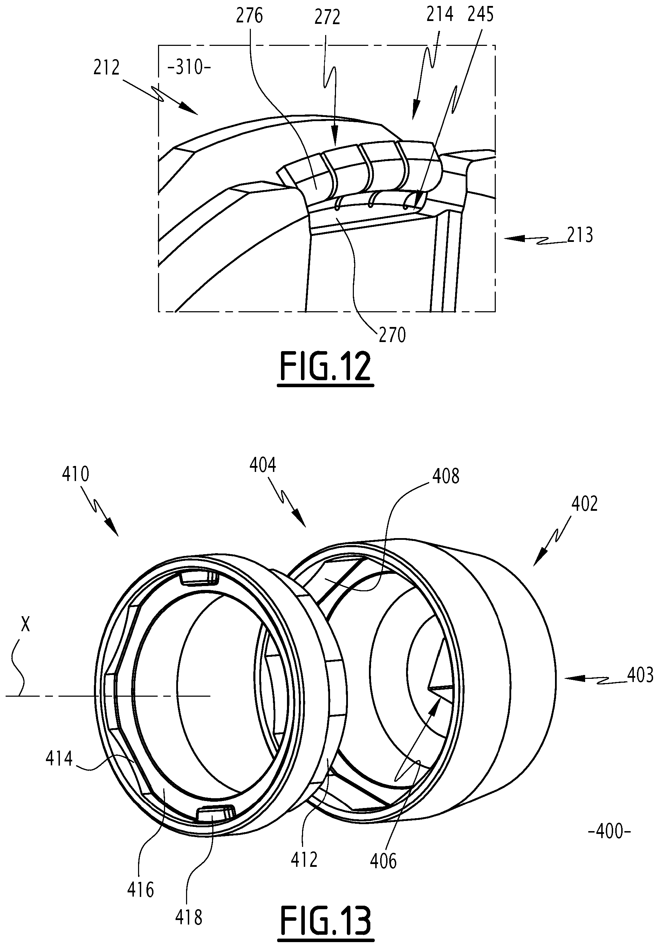

La figure 12 représente une vue de détail d'un dispositif de blocage 310 en position verrouillée. Le dispositif de blocage 310 est réalisé à partir de l'ensemble 210 et d'un arbre 24 (non représenté) de manière similaire au dispositif de blocage 300.

L'ensemble 210 comporte un moyen de verrouillage positif du dispositif de blocage 310, formé par la rondelle 214. La rondelle 214 comporte un corps annulaire 270 et deux languettes 272 s'étendant radialement vers l'extérieur par rapport audit corps annulaire. Une languette 272 est notamment visible sur la figure 12.

Le corps annulaire 270 est configuré de sorte à pouvoir être inséré autour de la deuxième partie 27 de la surface extérieure de l'écrou 212. Une périphérie intérieure du corps annulaire 270 comporte des méplats 274 (figure 3) aptes à s'engager dans les empreintes 28 de ladite deuxième partie 27, afin de bloquer en rotation la rondelle 214 par rapport à l'écrou 212.

Les deux languettes 272 sont de préférence situées en vis-à-vis l'une de l'autre par rapport à l'axe X. Chaque languette 272 s'étend à la périphérie du corps annulaire 270 sur une longueur d'arc inférieure à une longueur d'arc d'une encoche 245 de la bague 213.

Les languettes 272 sont déformables élastiquement entre une configuration de repos et une configuration de contrainte. Dans le mode de réalisation des figures 3 et 12, chaque languette 272 est formée de plusieurs pattes 276 juxtaposées le long de la périphérie du corps annulaire 270. En configuration de repos, visible sur les figures 3 et 12, chaque patte 276 a une forme de crochet en saillie axiale par rapport au corps annulaire 270.

Dans la position verrouillée visible sur la figure 12, chacune des languettes 272, en configuration de repos, est logée dans une encoche 245 de la bague 213. La forme de crochet des pattes 276 bloque en rotation la languette 272 dans l'encoche 245.

Les méplats 274 et les languettes 272 sont configurés et positionnés de sorte que chaque languette 272 s'encliquette naturellement dans une encoche 245 de la bague lorsque le dispositif de blocage 310 est en position verrouillée.

Dans la configuration de contrainte, les pattes 276 sont contraintes en flexion et repoussées de sorte que les languettes 272 soient sensiblement coplanaires au corps annulaire 270. En particulier, lorsque l'écrou 212 et la bague 213 sont dans une configuration angulaire différente de la position verrouillée, les languettes 272 sont maintenues en configuration de contrainte par la deuxième extrémité 16 de l'écrou et par la surface annulaire 39 de la bague. Un procédé de montage et de démontage du dispositif de blocage 310 sera détaillé ci-après.

La figure 13 représente un outil 400 de montage de l'ensemble pour le dispositif de blocage 300, 310. L'outil de montage 400 est apte à monter l'ensemble 10, 110, 210 sur l'arbre 24 précédemment décrit. Il est considéré que l'outil de montage 400 s'étend selon le même axe principal X que l'ensemble 10, 110, 210.

L'outil de montage 400 comporte une douille 402. Ladite douille comprend un corps tubulaire s'étendant entre une première extrémité 403 et une deuxième extrémité 404. La première extrémité 403 comprend une ouverture 406 non circulaire permettant l'emmanchement avec un arbre de même section d'un outillage de pose. La deuxième extrémité 404 comprend une surface intérieure présentant des méplats 408 aptes à s'engager avec les sections d'entraînement 26, 126, 226 de l'écrou 12, 112, 212 et avec les surfaces d'entraînement latérales 42, 142, 242 de la bague 13, 113, 213 alignées entre elles selon l'axe X.

Selon un mode de réalisation, l'outil de montage 400 comporte en outre un fourreau tubulaire 410 destiné au démontage du dispositif de blocage 310 de la figure 12. Une première extrémité dudit fourreau 410 comporte une surface extérieure d'entraînement 412 complémentaire des méplats 408 de la douille. Ladite surface extérieure d'entraînement 412 est apte à être introduite dans la deuxième extrémité 404 de la douille 402 pour que le fourreau 410 soit entraîné en rotation avec ladite douille.

Une deuxième extrémité dudit fourreau comporte une surface intérieure d'entraînement 414 complémentaire des surfaces d'entraînement latérales 242 de la bague 213. Ladite surface intérieure d'entraînement 414 aboutit à un épaulement plan 416, sensiblement perpendiculaire à X.

Le fourreau 410 comporte en outre deux saillies 418 situées face à face par rapport à l'axe principal X. Les saillies 418 s'étendent radialement vers l'intérieur par rapport à la surface intérieure d'entraînement 414 et axialement vers la deuxième extrémité du fourreau par rapport à l'épaulement plan 416.

Un procédé de montage du dispositif de blocage 300 à partir de l'ensemble 10 va maintenant être décrit.

Le deuxième filetage 40 de la bague 13 est vissé dans le deuxième taraudage 20 de l'écrou 12, de sorte que les sections d'entraînement 26 dudit écrou et les surfaces d'entraînement latérales 42 de ladite bague soient alignées. L'ensemble ainsi formé est assemblé à la douille 402, lesdites sections d'entraînement 26 et surfaces d'entraînement latérales 42 s'insérant dans les méplats 408. La douille 402 est assemblée à un outillage de pose qui permet de visser conjointement sur l'arbre 24 l'écrou 12 et la bague 13 assemblés. Le vissage est poursuivi jusqu'à ce que la première extrémité 15 de l'écrou 12 soit au contact de la surface 304 du roulement 302.

La douille 402 est ensuite reculée de sorte que la deuxième extrémité 404 entraîne uniquement les surfaces d'entraînement latérales 42 de la bague 13. Pour amener le dispositif de blocage dans la position dite verrouillée, ladite bague 13 est vissée dans le même sens que le premier filetage 22 de l'arbre 24. Pour amener le dispositif de blocage dans la position dite freinée, la bague 13 est vissée dans le sens inverse dudit premier filetage 22.

Deux positions de départ sont possibles pour amener le dispositif de blocage 300 en position verrouillée ou freinée. Une première position de départ consiste à visser la bague 13 dans l'écrou 12 jusqu'à ce que la surface annulaire 39 de ladite bague entre en contact avec la deuxième extrémité 16 dudit écrou. Pour amener le dispositif de blocage 300 en position verrouillée, la bague 13 est mise en rotation par rapport à l'écrou 12 dans le sens du premier filetage 22 de l'arbre 24. Cette rotation de la bague 13 est d'un angle faible, de l'ordre de quelques degrés.

Une deuxième position de départ consiste à visser la bague 13 dans l'écrou 13 jusqu'à ce que la surface annulaire 39 entre en contact avec la deuxième extrémité 16 de l'écrou, puis à faire pivoter la bague 13 dans le sens inverse par rapport audit écrou. Cette rotation en sens inverse correspond à un demi-pas, soit à 180°. La surface annulaire 39 de la bague 13 est ainsi écartée de la deuxième extrémité 16 de l'écrou.

Ensuite, pour amener le dispositif de blocage 300 en position verrouillée, la bague 13 est mise en rotation par rapport à l'écrou 12 dans le sens du premier filetage 22 de l'arbre 24. Cette rotation de la bague 13 est d'un de l'ordre d'une à deux dizaines de degrés. Le verrouillage du dispositif de blocage en partant de la deuxième position de départ présente l'avantage de mieux maitriser le couple de serrage appliqué à la bague.

Alternativement, pour amener le dispositif de blocage 300 en position freinée, la bague 13 est tournée par rapport à l'écrou 12 dans le sens inverse du premier filetage 22, d'un angle de l'ordre d'une à deux dizaines de degrés.

En position verrouillée comme en position freinée, une fois l'écrou 12 vissé et en appui sur le roulement 302, la première extrémité 15 dudit écrou est au contact de la surface 304 du roulement et les flancs de filet arrière du premier taraudage 18 de l'écrou sont en contact avec les flancs de filet avant du premier filetage 22 de l'arbre.

La première configuration du dispositif de blocage 300, telle que représentée à la figure 4, correspond à la position verrouillée telle qu'obtenue à partir de la première position de départ précédemment décrite. Dans cette configuration, la deuxième extrémité 16 de l'écrou est en contact avec la surface annulaire 39 de la bague, les flancs de filet arrière du troisième taraudage 38 de la bague sont en contact avec les flancs de filet avant du premier filetage 22 de l'arbre. Les flancs de filets du deuxième taraudage 20 de l'écrou et du deuxième filetage 40 de la bague ne sont pas en contact.

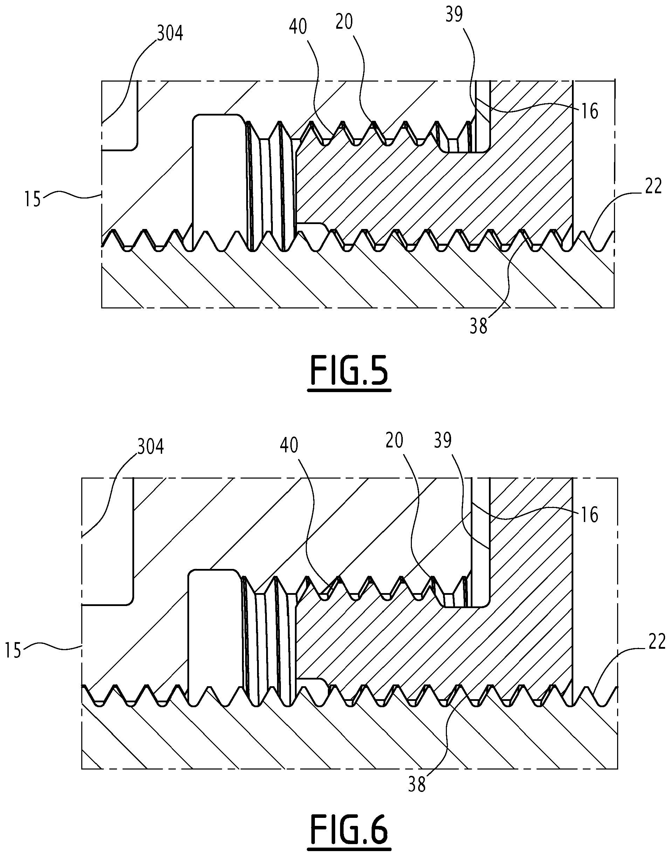

La deuxième configuration du dispositif de blocage 300, telle que représentée à la figure 5, correspond à la position verrouillée telle qu'obtenue à partir de la deuxième position de départ précédemment décrite. Dans cette configuration, la deuxième extrémité 16 de l'écrou n'est pas en contact avec la surface annulaire 39 de la bague, les flancs de filet arrière du troisième taraudage 38 de la bague sont en contact avec les flancs de filet avant du premier filetage 22 de l'arbre, et les flancs de filet arrière du deuxième taraudage 20 de l'écrou sont en contact avec les flancs de filet avant du deuxième filetage 40 de la bague.

Un dispositif de blocage 300 correspondant à l'exemple expérimental du mode de réalisation de la figure 1, décrit ci-dessus, a été testé en position verrouillée dans un banc test. Une fois le dispositif de blocage verrouillé, un couple de 450 N.m appliqué à l'écrou ne permet pas de dévisser l'ensemble écrou / bague, quelle que soit la position de départ employée.

La troisième configuration du dispositif de blocage 300, telle que représentée à la figure 6, correspond à la position freinée telle qu'obtenue à partir de la deuxième position de départ précédemment décrite. Dans cette configuration, la deuxième extrémité 16 de l'écrou n'est pas en contact avec la surface annulaire 39 de la bague, les flancs de filet avant du troisième taraudage 38 de la bague sont en contact avec les flancs de filet arrière du premier filetage 22 de l'arbre, tandis que les flancs de filet avant du deuxième taraudage 20 de l'écrou sont en contact avec les flancs de filet arrière du deuxième filetage 40 de la bague.

Un dispositif de blocage 300 correspondant à l'exemple expérimental du mode de réalisation de la figure 1, décrit ci-dessus, a été testé en position freinée dans un banc test. Une fois le dispositif de blocage freiné, un couple de 200 N.m appliqué à l'écrou permet de dévisser l'ensemble écrou / bague.

Ce couple reste deux fois supérieur aux couples de freinage maximum des normes EN3299 ou EN4376. Le terme de freinage est donc ici utilisé pour indiquer qu'il est possible de dévisser le dispositif de blocage, bien que les couples nécessaires pour déverrouiller le dispositif de blocage restent largement supérieurs aux couples conventionnellement induits par des vibrations appliqués au système arbre / dispositif de blocage, et cités dans lesdites normes.

Un procédé de montage du dispositif de blocage 310 à partir de l'ensemble 210 au moyen de l'outil de montage 400 va maintenant être décrit.

Le corps annulaire 270 de la rondelle 214 est inséré autour de la deuxième partie 27 de la surface extérieure de l'écrou 212, les méplats 274 prenant place dans les empreintes 28. Le deuxième filetage 40 de la bague 213 est ensuite vissé dans le deuxième taraudage 20 de l'écrou 212, de sorte que les sections d'entraînement 226 et les surfaces d'entraînement latérales 242 soient alignées. L'ensemble ainsi formé est assemblé à la douille 402 et vissé sur l'arbre 24, comme dans le procédé de montage du dispositif de blocage 300 précédemment décrit.

La bague 213 est ensuite vissée par rapport à l'écrou 212 jusqu'à la position verrouillée ou freinée. Avant que ladite position verrouillée ne soit atteinte, les languettes 272 de la rondelle 214 sont maintenues dans le plan du corps annulaire 270 par la deuxième extrémité 16 de l'écrou et par la surface annulaire 39 de la bague. Ladite bague peut ainsi pivoter par rapport à l'écrou. Lorsque la deuxième position de départ est utilisée, le montage s'effectue en utilisant le fourreau 410 pour maintenir les languettes 272 de la rondelle constamment repoussées par les saillies 418 de la douille 410, même lorsque les languettes sont chacune en vis-à-vis d'une encoche 245 formée dans la surface annulaire.

Lorsque la position verrouillée est atteinte, chaque languette 272 est en vis-à-vis d'une encoche 245 formée dans la surface annulaire 39. L'outil de montage 400 est ensuite reculé. La languette 272 se déforme alors élastiquement pour reprendre sa configuration de repos, bloquant en rotation la bague 213 et l'écrou 212.

La rondelle 214 assure deux fonctions : une première fonction est de garantir un verrouillage positif entre l'écrou 212 et la bague 213, par l'engagement des méplats 274 avec les empreintes 28 de l'écrou, et des languettes 272 avec les encoches 245 de la bague. Une deuxième fonction est de fournir une indication visuelle du verrouillage, chaque languette 272 étant visible dans une encoche 245 lorsque la position verrouillée du dispositif de blocage 310 est atteinte.

Un procédé de démontage du dispositif de blocage 310 va maintenant être décrit. Le fourreau 410 de l'outil de montage 400 est assemblé à la douille 402, et est avancé de sorte à venir en contact avec la bague 213, sur laquelle est insérée la rondelle 214. Les saillies 418 repoussent axialement les pattes 276 en direction de l'écrou 212. Les languettes 272 sont ainsi repoussées, ce qui libère en rotation la bague 213 par rapport à l'écrou 212. La bague 213 peut tourner librement par l'entraînement des surfaces d'entraînement par les surfaces d'entraînement 414 complémentaires du fourreau. Le fourreau est ôté de la douille et l'ensemble 210 est enlevé d'un bloc, en le tournant dans le sens inverse du premier filetage 22, au moyen de la douille 402 seule.

## Revendications

**1.** Dispositif de blocage (300, 310) comprenant :

- un arbre (24) comprenant un premier filetage (22), et
- un écrou (12, 112, 212) et une bague (13, 113, 213) destinés à être assemblés sur l'arbre (24) ;

l'écrou (12, 112, 212) comprenant un premier taraudage (18) apte à coopérer avec le premier filetage (22) de l'arbre, lesdits premiers filetage et taraudage définissant un premier jeu radial (J1) ;
l'écrou comprenant en outre un deuxième taraudage (20) de sens opposé au premier taraudage (18), les premier et deuxième taraudages étant coaxiaux,
une surface extérieure de la bague (13, 113, 213) comportant un deuxième filetage (40) apte à coopérer avec le deuxième taraudage (20) de l'écrou, lesdits deuxièmes filetage et taraudage définissant un deuxième jeu radial (J2) ;
une surface intérieure de ladite bague comportant un troisième taraudage (38) apte à coopérer avec le premier filetage (22) de l'arbre, lesdits premier filetage et troisième taraudage définissant un troisième jeu radial (J3) ;
**caractérisé en ce que** :

- les premier (18), deuxième (20) et troisième (38) taraudages et les premier (22) et deuxième (40) filetages présentent un pas de filet (P) identique et constant ; et
- chacun des deuxième (J2) et troisième (J3) jeux radiaux est supérieur au premier jeu radial (J1).

**2.** Ensemble (10, 110, 210) pour dispositif de blocage selon la revendication 1, comprenant :

- un écrou (12, 112, 212) comprenant un premier (18) et un deuxième (20) taraudages coaxiaux et de sens opposé ; et
- une bague (13, 113, 213) ;

une surface extérieure de ladite bague comportant un deuxième filetage (40) apte à coopérer avec le deuxième taraudage (20) de l'écrou, de sorte à définir un deuxième jeu radial (J2) ;
l'ensemble étant **caractérisé en ce que** :

- une surface intérieure de la bague comporte un troisième taraudage (38) ; les premier (18) et troisième (38) taraudages étant aptes à coopérer avec un même premier filetage (22) de profil triangulaire ISO normalisé, de sorte à définir avec ledit premier filetage un premier (J1) et un troisième (J3) jeux radiaux ;
- les premier (18), deuxième (20) et troisième (38) taraudages et le deuxième filetage (40) présentent un pas de filet (P) identique et constant ;
- chacun des premier taraudage (18) et deuxième filetage (40) présentent un profil triangulaire ISO normalisé ; et
- les deuxième (20) et troisième (38) taraudages présentent un profil triangulaire ISO, dont un diamètre à flanc de filet est supérieur au diamètre à flanc de filet du profil triangulaire ISO normalisé, de sorte que chacun des deuxième (J2) et troisième (J3) jeux radiaux est supérieur au premier jeu radial (J1).

3. Ensemble selon la revendication 2, dans lequel chacun des diamètres à flanc de filet des deuxième (20) et troisième (38) taraudages est augmenté d'une même valeur de décalage (A) par rapport au diamètre à flanc de filet du profil triangulaire ISO normalisé correspondant.

4. Ensemble selon la revendication 3, dans lequel la valeur de décalage (A) est définie suivant la formule suivante :

$$A \geq (2P \times \alpha) / (360° \times \mathrm{Tan}\ \beta)$$

avec

$\alpha$ = angle minimum de serrage souhaité, exprimé en degrés,
$\beta$ = demi angle de filet ISO, exprimé en degrés.

5. Ensemble selon la revendication 4, dans lequel l'angle minimum de serrage souhaité ($\alpha$) est compris entre 10° et 60°.

6. Ensemble selon l'une des revendications 2 à 5, dans lequel

- l'écrou (12, 112, 212) comprend des premières surfaces d'entraînement (26, 126, 226) permettant un entraînement en rotation dudit écrou par rapport à l'arbre (24) et/ou par rapport à la bague (13) ;
- la bague (13, 113, 213) comprend des deuxièmes surfaces d'entraînement (42, 142, 242) permettant un entraînement en rotation de ladite bague par rapport à l'arbre (24) et/ou par rapport à l'écrou ;
lesdites premières et deuxièmes surfaces d'entraînement étant configurées pour s'aligner les unes aux autres, de sorte à permettre un entraînement en rotation de l'écrou conjointement à la bague.

7. Ensemble selon la revendication 6, dans lequel les premières (26, 126, 226) et deuxièmes (42, 142, 242) surfaces d'entraînement sont formées par des plans sensiblement parallèles à un axe (X) de rotation de l'écrou et/ou de la bague.

8. Ensemble (110) selon la revendication 2, dans lequel :

- une portion (33) de la bague, en saillie radiale externe par rapport au deuxième filetage (40), comporte au moins une lumière (60) traversante selon l'axe principal (X) ; et
- une surface (16) de l'écrou, perpendiculaire à l'axe principal, comporte au moins un marquage visuel (64), ledit au moins un marquage visuel étant configuré pour être en vis-à-vis de l'au moins une lumière (60) lorsque l'écrou et la bague sont dans une position d'installation, et à l'écart de ladite au moins une lumière lorsque l'écrou et la bague sont hors de ladite position d'installation.

9. Ensemble (210) selon l'une des revendications 2 à 8, comprenant en outre une rondelle (214) configurée (274) de sorte à être insérée autour de l'un (212) de l'écrou et de la bague, de manière fixe en rotation par rapport audit écrou ou à ladite bague,
la rondelle comprenant un moyen (272) d'emboîtement élastique avec l'autre (213) de la bague et de l'écrou dans une position d'installation, de sorte à empêcher une rotation l'un par rapport à l'autre de la bague et de l'écrou à partir de ladite position d'installation.

10. Dispositif de blocage (300, 310) selon la revendication 1, comprenant un ensemble (10, 110, 210) selon l'une des revendications 2 à 9, le premier filetage (22) de l'arbre (24) présentant un profil triangulaire ISO normalisé.

11. Kit de montage d'un dispositif de blocage, ledit kit de montage comportant :

- un ensemble (10, 110, 210) selon l'une des revendications 2 à 9; et
- un outil de montage (400) comportant une douille (402) tubulaire, une extrémité (404) de ladite douille comprenant une surface intérieure (408) apte à s'engager avec les premières (26, 126, 226) et deuxièmes (42, 142, 242) surfaces d'entraînement, respectivement de l'écrou et de la bague, pour un entraînement en rotation de l'écrou conjointement à la bague.

**12.** Kit de montage selon la revendication 11, dans lequel :

- l'ensemble (210) est selon la revendication 9 ; et
- l'outil de montage comporte en outre un manchon (410) tubulaire comprenant une première (412) et une seconde (414) extrémités, aptes à s'engager respectivement avec la surface intérieure (408) de la douille et avec les deuxièmes surfaces d'entraînement (42) de la bague, pour un entraînement en rotation de la bague par rapport à l'écrou,
le manchon comprenant en outre au moins une saillie (418) apte à déformer l'au moins une languette (272) de la rondelle (214) depuis la configuration de repos vers la configuration de contrainte, de sorte à permettre une rotation de la bague (213) par rapport à l'écrou (212) depuis la position d'installation.

**Patentansprüche**

**1.** Arretiervorrichtung (300, 310), umfassend:

- eine Welle (24), umfassend ein erstes Gewinde (22), und
- eine Mutter (12, 112, 212) und einen Ring (13, 113, 213), die dazu bestimmt sind, auf der Welle (24) montiert zu werden;

die Mutter (12, 112, 212) umfassend ein erstes Innengewinde (18), das geeignet ist, um mit dem ersten Gewinde (22) der Welle zusammenzuwirken, wobei das erste Gewinde und das erste Innengewinde ein erstes radiales Spiel (J1) definieren;
die Mutter ferner umfassend ein zweites Innengewinde (20) mit entgegengesetzter Richtung zu dem ersten Innengewinde (18), wobei das erste und das zweite Innengewinde koaxial sind,
eine Außenfläche des Rings (13, 113, 213) umfassend ein zweites Gewinde (40), das geeignet ist, um mit dem zweiten Innengewinde (20) der Mutter zusammenzuwirken, wobei das zweite Gewinde und das zweite Innengewinde ein zweites radiales Spiel (J2) definieren;
eine Innenfläche des Rings umfassend ein drittes Innengewinde (38), das geeignet ist, um mit dem ersten Gewinde (22) der Welle zusammenzuwirken, wobei das erste Gewinde und das dritte Innengewinde ein drittes radiales Spiel (J3) definieren;
**dadurch gekennzeichnet, dass**:

- das erste (18), das zweite (20) und das dritte (38) Innengewinde und das erste (22) und das zweite (40) Außengewinde eine identische und konstante Gewindesteigung (P) aufweisen; und
- jedes von dem zweiten (J2) und dem dritten (J3) radialen Spiel größer ist als das erste radiale Spiel (J1) ist.

**2.** Anordnung (10, 110, 210) für Arretiervorrichtung nach Anspruch 1, umfassend:

- eine Mutter (12, 112, 212), umfassend ein erstes (18) und ein zweites (20) koaxiales Innengewinde mit entgegengesetzter Richtung; und
- einen Ring (13, 113, 213);

eine Außenfläche des Rings umfassend ein zweites Gewinde (40) aufweist, das geeignet ist, um mit dem zweiten Innengewinde (20) der Mutter zusammenwirken kann, sodass ein zweites radiales Spiel (J2) definiert wird;
wobei die Anordnung **dadurch gekennzeichnet ist, dass**:

- eine Innenfläche des Rings ein drittes Innengewinde (38) umfasst; wobei das erste (18) und das dritte (38) Innengewinde geeignet sind, um mit einem gleichen ersten Gewinde (22) mit ISO-genormtem dreieckigem Profil zusammenzuwirken, sodass mit dem ersten Gewinde ein erstes (J1) und ein drittes (J3) radiales Spiel definiert wird;
- das erste (18), das zweite (20) und das dritte (38) Innengewinde und das zweite Gewinde (40) eine identische und konstante Gewindesteigung (P) aufweisen;
- jedes von dem ersten Innengewinde (18) und dem zweiten Gewinde (40) jeweils ein ISO-genormtes dreieckiges Profil aufweisen; und
- das zweite (20) und das dritte (38) Innengewinde ein dreieckiges ISO-Profil aufweisen, von dem ein Gewindeflankendurchmesser größer ist als der Gewindeflankendurchmesser des ISO-genormten dreieckigen Profils, sodass jedes von dem zweiten (J2) und dem dritten (J3) radialen Spiel größer ist als das erste radiale Spiel (J1).

**3.** Anordnung nach Anspruch 2, wobei jeder von dem Gewindeflankendurchmesser des zweiten (20) und des dritten (38) Innengewindes um einen gleichen Versatzwert (A) gegenüber dem Gewindeflankendurchmesser des entsprechenden ISO-genormten dreieckigen Profils erhöht ist.

**4.** Anordnung nach Anspruch 3, wobei der Versatzwert (A) gemäß der folgenden Formel definiert ist:

$$A \geq (2P \times \alpha) / (360° \times \mathrm{Tan}\ \beta)$$

wobei

$\alpha$ = gewünschter minimaler Anzugswinkel, ausgedrückt in Grad,
$\beta$ = ISO-Gewindehalbwinkel, ausgedrückt in Grad.

**5.** Anordnung nach Anspruch 4, wobei der gewünschte minimale Anzugswinkel ($\alpha$) zwischen 10° und 60° liegt.

**6.** Anordnung nach einem der Ansprüche 2 bis 5, wobei

- die Mutter (12, 112, 212) erste Antriebsflächen (26, 126, 226) umfasst, die einen Drehantrieb der Mutter in Bezug auf die Welle (24) und/oder in Bezug auf den Ring (13) ermöglichen;
- der Ring (13, 113, 213) zweite Antriebsflächen (42, 142, 242) umfasst, die einen Drehantrieb des Rings in Bezug auf die Welle (24) und/oder in Bezug auf die Mutter ermöglichen;
wobei die ersten und die zweiten Antriebsflächen konfiguriert sind, um miteinander fluchten, um einen Drehantrieb der Mutter zusammen mit dem Ring zu ermöglichen.

**7.** Anordnung nach Anspruch 6, wobei die ersten (26, 126, 226) und die zweiten (42, 142, 242) Antriebsflächen durch Ebenen gebildet sind, die im Wesentlichen parallel zu einer Drehachse (X) der Mutter und/oder des Rings sind.

**8.** Anordnung (110) nach Anspruch 2, wobei:

- ein Abschnitt (33) des Rings, der in Bezug auf das zweite Gewinde (40) radial nach außen hervorsteht, mindestens ein durchgehendes Lumen (60) entlang der Hauptachse (X) umfasst; und
- eine Oberfläche (16) der Mutter senkrecht zu der Hauptachse mindestens eine visuelle Markierung (64) umfasst,
wobei die mindestens eine visuelle Markierung konfiguriert ist, um dem mindestens ein Lumen (60) gegenüber zu sein, wenn die Mutter und der Ring in einer Installationsposition sind, und von dem mindestens einen Lumen beabstandet zu sein, wenn die Mutter und der Ring außerhalb der Installationsposition sind.

**9.** Anordnung (210) nach einem der Ansprüche 2 bis 8, ferner umfassend eine Unterlegscheibe (214), die konfiguriert (274) ist, um auf drehfeste Weise in Bezug auf die Mutter oder den Ring um eines (212) von der Mutter und dem Ring eingesetzt zu werden,
die Unterlegscheibe umfassend eine Einrichtung (272) zum elastischen Ineinandergreifen mit dem anderen (213) von dem Ring und der Mutter in einer Installationsposition, sodass eine Drehung des Rings und der Mutter in Bezug aufeinander aus der Installationsposition verhindert wird.

**10.** Arretiervorrichtung (300, 310) nach Anspruch 1, umfassend eine Anordnung (10, 110, 210) nach einem der Ansprüche 2 bis 9, wobei das erste Gewinde (22) der Welle (24) ein ISO-genormtes dreieckiges Profil aufweist.

**11.** Montagekit für eine Arretiervorrichtung, das Montagekit umfassend:

- eine Anordnung (10, 110, 210) nach einem der Ansprüche 2 bis 9; und
- ein Montagewerkzeug (400), umfassend eine rohrförmige Hülse (402), ein Ende (404) der Hülse umfassend eine Innenfläche (408), die geeignet ist, um mit den ersten (26, 126, 226) bzw. den zweiten (42, 142, 242) Antriebsflächen der Mutter und des Rings einzugreifen, um die Mutter zusammen mit dem Ring in Drehung zu versetzen.

**12.** Montagekit nach Anspruch 11, wobei:

- die Anordnung (210) nach Anspruch 9 ist; und
- das Montagewerkzeug ferner eine rohrförmige Hülse (410) umfasst, umfassend ein erstes (412) und ein zweites (414) Ende aufweist, die geeignet sind, um mit der Innenfläche (408) der Hülse bzw. mit den zweiten Antriebsflächen (42) des Rings einzugreifen, um den Ring in Bezug auf die Mutter in Drehung zu versetzen, die Hülse ferner umfassend mindestens einen Vorsprung (418), der geeignet ist, um mindestens eine Zunge (272) der Unterlegscheibe (214) von der Ruhekonfiguration in die Belastungskonfiguration zu verformen, um eine Drehung des Rings (213) in Bezug auf die Mutter (212) aus der Installationsposition zu ermöglichen.

**Claims**

**1.** A locking device (300, 310) comprising:

- a shaft (24) comprising a first external thread (22), and
- a nut (12, 112, 212) and a ring (13, 113, 213) to be assembled on the shaft (24); the nut (12, 112, 212) comprising a first internal thread (18) adapted to mate with the first external thread (22) of the shaft, said first internal and external threads defining a first radial clearance (J1);

the nut further comprising a second internal thread (20) in the opposite direction to the first internal thread (18), the first and second internal threads being coaxial,
an outer surface of the ring (13, 113, 213) comprising a second external thread (40) adapted to mate with the second internal thread (20) of the nut, said second internal and external threads defining a second radial clearance (J2);
an inner surface of said ring having a third internal thread (38) adapted to mate with the first external thread (22) of the shaft, said first external and third internal threads defining a third radial clearance (J3);
**characterised in that**:

- the first (18), second (20) and third (38) internal threads and the first (22) and second (40) external threads have an identical and constant thread pitch (P); and
- each of the second (J2) and third (J3) radial clearances is greater than the first radial clearance (J1).

**2.** An assembly (10, 110, 210) for a locking device according to claim 1, comprising:

- a nut (12, 112, 212) comprising first (18) and second (20) coaxial, oppositely directed internal threads; and
- a ring (13, 113, 213);

an outer surface of said ring comprising a second external thread (40) adapted to mate with the second internal thread (20) of the nut, so as to define a second radial clearance (J2);
the assembly being **characterised in that**:

- an inner surface of the ring comprises a third internal thread (38); the first (18) and third (38) internal threads being able to mate with the same first external thread (22) of standard ISO triangular profile, so as to define with the said first external thread a first (J1) and a third (J3) radial clearance;
- the first (18), second (20) and third (38) internal threads and the second (40) external thread have an identical, constant thread pitch (P);
- each of the first (18) and second (40) internal threads has a standard ISO triangular profile; and
- the second (20) and third (38) internal threads have an ISO triangular profile, a thread flank diameter of which is greater than the thread flank diameter of the standard ISO triangular profile, so that each of the second (J2) and third (J3) radial clearances is greater than the first radial clearance (J1).

**3.** The assembly according to claim 2, wherein each of the thread flank diameters of the second (20) and third (38) internal threads is increased by the same offset value (A) from the thread flank diameter of the corresponding standard ISO triangular profile.

4. The assembly according to claim 3, wherein the offset value (A) is defined according to the following formula:

$$A \geq (2P \times \alpha) / (360° \times \tan \beta)$$

where

$\alpha$ = desired minimum clamping angle, expressed in degrees,
$\beta$ = ISO half thread angle, expressed in degrees.

5. The assembly according to claim 4, wherein the desired minimum clamping angle ($\alpha$) is between 10° and 60°.

6. The assembly according to one of claims 2 to 5, wherein:

   - the nut (12, 112, 212) comprises first driving surfaces (26, 126, 226) allowing said nut to be rotated with respect to the shaft (24) and/or with respect to the ring (13);
   - the ring (13, 113, 213) comprises second driving surfaces (42, 142, 242) allowing said ring to be rotated with respect to the first external thread (24) and/or with respect to the nut;
   said first and second drive surfaces being configured to align with each other, so as to allow the nut to be rotated in conjunction with the ring.

7. The assembly according to claim 6, wherein the first (26, 126, 226) and second (42, 142, 242) drive surfaces are formed by planes substantially parallel to an axis (X) of rotation of the nut and/or ring.

8. The assembly (110) according to claim 2, wherein:

   - a portion (33) of the ring, projecting radially outwards from the second external thread (40), comprises at least one hole (60) passing through it along the main axis (X); and
   - a surface (16) of the nut, perpendicular to the main axis, comprises at least one visual marking (64),
   said at least one visual marking being configured to face the at least one hole (60) when the nut and ring are in an installation position, and away from said at least one hole when the nut and ring are out of said installation position.

9. The assembly (210) according to any of claims 2 to 8, further comprising a washer (214) configured (274) to be inserted around either (212) the nut or the ring in a rotationally fixed manner with respect to said either nut or ring, the washer comprising means (272) for resiliently interlocking with the other (213) of the ring and nut in an installation position, so as to prevent rotation of the ring and nut relative to each other from said installation position.

10. The locking device (300, 310) according to claim 1, comprising an assembly (10, 110, 210) according to one of claims 2 to 9, the first external thread (22) of the shaft (24) having a standard ISO triangular profile.

11. A kit for mounting a locking device, said mounting kit comprising:

    - an assembly (10, 110, 210) according to any one of claims 2 to 9; and
    - a mounting tool (400) comprising a tubular socket (402), one end (404) of said socket comprising an inner surface (408) adapted to engage with the first (26, 126, 226) and second (42, 142, 242) drive surfaces of the nut and ring, respectively, for rotational driving of the nut together with the ring.

12. The mounting kit according to claim 11, wherein:

    - the assembly (210) is according to claim 9; and
    - the mounting tool further comprises a tubular sleeve (410) having first (412) and second (414) ends adapted to engage with the inner surface (408) of the socket and the second drive surfaces (42) of the ring, respectively, for rotational driving of the ring relative to the nut,
    the sleeve further comprising at least one projection (418) adapted to deform the at least one tab (272) of the washer (214) from the resting configuration to the stressed configuration, so as to allow rotation of the ring (213) relative to the nut (212) from the installation position.

## FIG.1

## FIG.2

**FIG.3**

**FIG.4**

**FIG.5**

**FIG.6**

**FIG.7**

**FIG.8**

**FIG.9**

**FIG.10**

**FIG.11**

FIG.12

FIG.13

**RÉFÉRENCES CITÉES DANS LA DESCRIPTION**

**Documents brevets cités dans la description**

- EP 0130304 A